(19) Europäisches Patentamt
European Patent Office
Office européen des brevets

(11) Veröffentlichungsnummer: **0 249 127 B1**

(12) **EUROPÄISCHE PATENTSCHRIFT**

(45) Veröffentlichungstag der Patentschrift: **28.10.92**

(51) Int. Cl.[5]: **C09D 11/00**

(21) Anmeldenummer: **87107950.5**

(22) Anmeldetag: **02.06.87**

Die Akte enthält technische Angaben, die nach dem Eingang der Anmeldung eingereicht wurden und die nicht in dieser Patentschrift enthalten sind.

(54) **Aufzeichnungsflüssigkeit für Tintenstrahl-Aufzeichnungssysteme.**

(30) Priorität: **11.06.86 DE 3619572**

(43) Veröffentlichungstag der Anmeldung:
**16.12.87 Patentblatt 87/51**

(45) Bekanntmachung des Hinweises auf die Patenterteilung:
**28.10.92 Patentblatt 92/44**

(84) Benannte Vertragsstaaten:
**CH DE FR GB LI**

(56) Entgegenhaltungen:
**DE-A- 3 436 891**

**COLOUR INDEX, Band 4, 3. Auflage, 1971, Seite 4251, Nr. 27720, The Society of Dyers and Colourists, Bradford, GB**

(73) Patentinhaber: **BAYER AG**

**W-5090 Leverkusen 1 Bayerwerk(DE)**

(72) Erfinder: **Kunde, Klaus, Dr.**
**Uppersberg 45**
**W-5090 Leverkusen 1(DE)**

EP 0 249 127 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist eine Aufzeichnungsflüssigkeit für Tintenstrahl-Aufzeichnungssysteme, dadurch gekennzeichnet, daß sie einen Farbstoff der Formel (I)

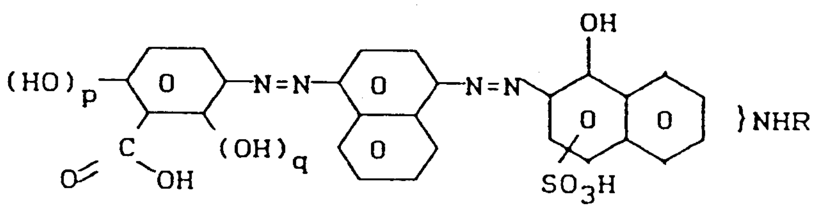

(I)

oder einen Farbstoff der Formel (II)

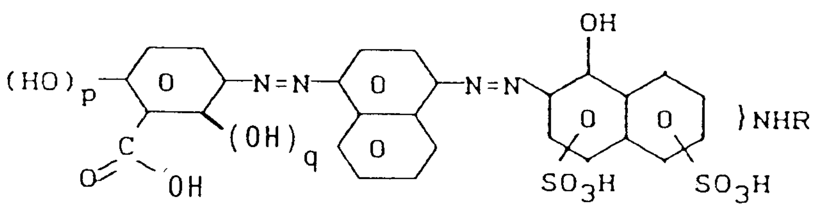

(II)

oder einen Farbstoff der Formel (III) jeweils in Form seines Lithiumsalzes enthält,

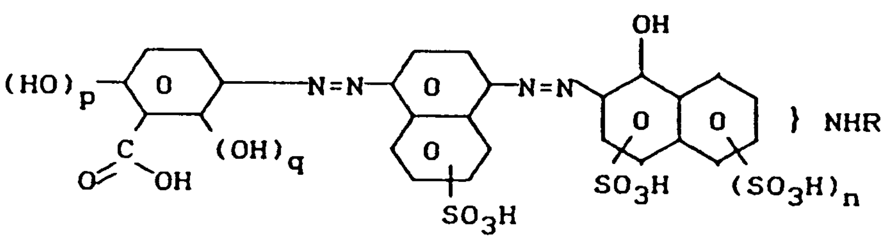

(III)

worin

R = H, gegebenenfalls durch Hydroxy oder Amino substituiertes $C_1$-$C_4$-Alkyl, gegebenenfalls substituiertes $C_1$-$C_4$-Alkylcarbonyl, gegebenenfalls substituiertes Phenyl oder gegebenenfalls substituiertes Phenylcarbonyl,

n = 0, 1

p,q = 0, 1, wobei p + q = 1,

sowie deren Verwendung in Tintenstrahl-Aufzeichnungssystemen.

Bevorzugte Farbstoffe (I) sind solche der Formel (IV)

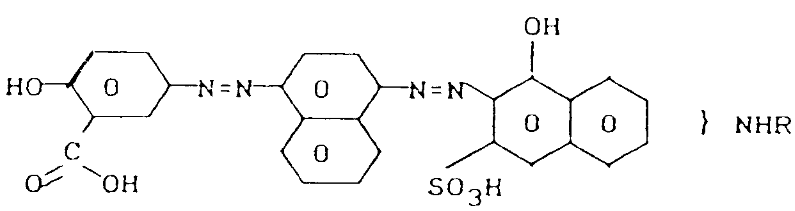

(IV)

in Form ihrer Lithiumsalze,

bevorzugte Farbstoffe II sind solche der Formeln (V), (VI) und (VII)

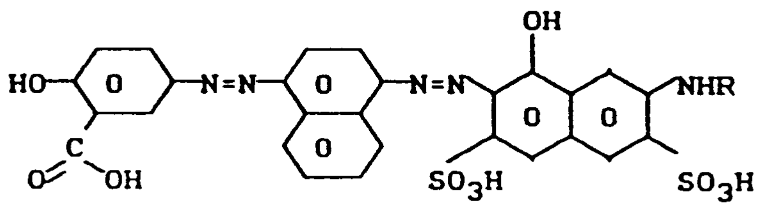

(V)

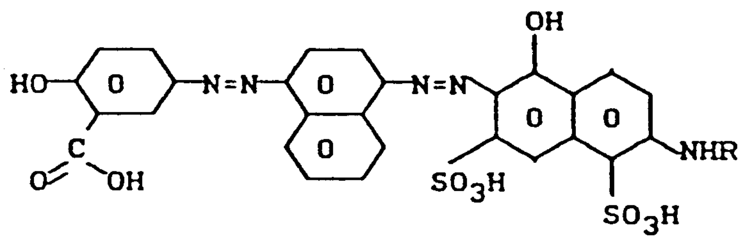

(VI)

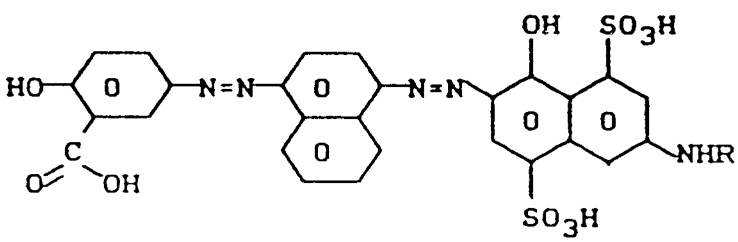

(VII)

jeweils in Form ihrer Lithiumsalze,
und bevorzugte Farbstoffe III sind solche der Formel (VIII)

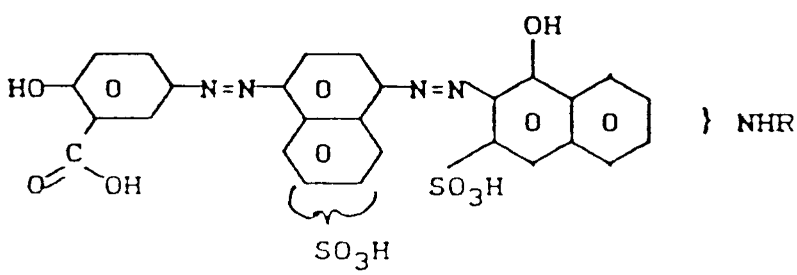

(VIII)

in Form ihrer Lithiumsalze.

Bevorzugte Farbstoffe (I) bis (VIII) sind solche mit

R = H, $CH_3$, $C_2H_4OH$, $C_2H_4NH_2$, Phenyl, 3-Sulfophenyl, Acetyl, Propionyl, Benzoyl, Maleinyl, 4-Sulfophlenyl, 3-Carboxyphlenyl, 4-Carboxyphenyl.

Die Aufzeichnungsflüssigkeit kann einen oder meherere Farbstoffe (I) enthalten.

Die Herstellung der Farbstoffe (I) - (VIII) erfolgt in an sich bekannter Weise durch Diazotierung von Aminoazoverbindungen der Formel

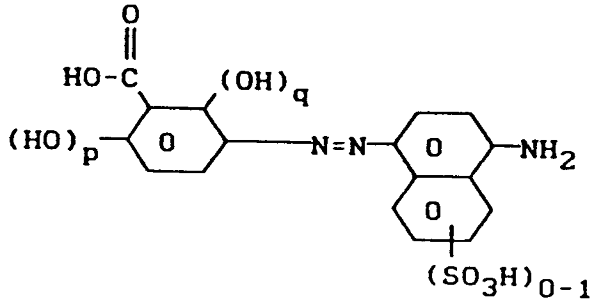

(X)

und Kupplung mit Verbindungen der Formel

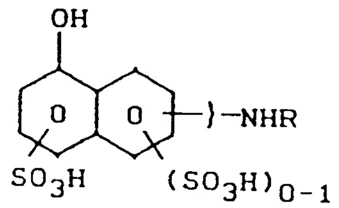

(XI)

in neutralem bis alkalischem Milieu.

(X) erhält man durch Kuppeln von diazotierter 3- und/oder 5-Aminosalicylsäure mit den entsprechenden 1-Aminonaphthalin-(sulfosäuren).

Die erfindungsgemäßen Aufzeichnungsflüssigkeiten enthalten in allgemeinen etwa 1-20 Gew.-% eines oder mehrerer Farbstoffe (I) - (VIII), 80-90 Gew.-% Wasser und/oder polare protische oder dipolare aprotische Lösungsmittel sowie gegebenenfalls weitere übliche Bestandteile.

Bevorzugte Lösungsmittel sind dabei mehrwertige Alkohole und deren Ether oder Ester, Carbonsäureamide, Sulfoxide und Sulfone, insbesondere solche mit Molekulargewichten <200. Besonders geeignete Lösungsmittel sind beispielsweise: Ethylenglykol, Diethylenglykol, Triethylenglykol, Essigsäure-2-hydroxyethylester, Essigsäure-2-(2'-hydroxy)-ethylester, Glycerin, 1,2-Dihydroxypropan, 1-Methoxy-2-propanol, 2-Methoxy-1-propanol, N,N-Dimethylformamid, $\epsilon$-Caprolactam, N-Methyl-$\epsilon$-caprolactam, Tetramethylharnstoff, 1,3-Dimethyl-2-imidazolidinon, N,N'-Dimethylpropylenharnstoff, Dimethylsulfoxid, Dimethylsulfon, Sulfolan.

Die erfindungsgemäßen Tinten werden z.B. durch Auflösen der entsprechenden Lithium-Salze der Farbstoffe (I) in Wasser und/oder einem oder mehreren der obengenannten organischen Lösungsmitteln, gegebenenfalls bei erhöhten Temperaturen und unter Zusatz von Lithiumhydroxid oder organischen Basen hergestellt; gegebenenfalls können zusätzlich noch übliche ionische oder nicht-ionische Zusatzstoffe verwendet werden, z.B. solche mit denen die Viskosität erniedrigt und/oder die Oberflächenspannung erhöht werden können.

Anstelle der Salze von (I) können auch die entsprechenden freien Säuren in Kombination mit mindestens äquimolaren Mengen Lithiumhydroxyd eingesetzt werden.

Als organische Basen können z.B. Ethanolamin, Diethanolamin, Triethanolamin, N-Methylethanolamin, N,N-Dimethylethanolamin, N-Methyldiethanolamin, 1-Amino-2-propanol, 2-Amino-1-propanol, Di-isopropanolamin, N-2-Hydroxyethyldiisopropanolamin, Tris-N,N,N-[2-(2'-hydroxyethoxy)-ethyl]-amin oder Natriummethylat, Lithiumethylat, Kalium-tert.-butylat dienen.

Bei der Verwendung der erfindungsgemäßen Farbstoffe in Ink-Jet-Finten erhält man kontrastreiche, scharfe Bilder mit hoher Wasser-, Licht- und Abriebechtheit.

Die erfindungsgemäßen Tinten sind lager-, hitze- und gebrauchsstabil, ihre Viskosität und ihre Oberflächenspannung sind den unterschiedlichen Erfordernissen anpaßbar; sie besitzen gute Aufzeichnungsfähigkeit und Strahlstabilitäten.

Beispiel 1

3 g des Farbstoffs der Formel (c)

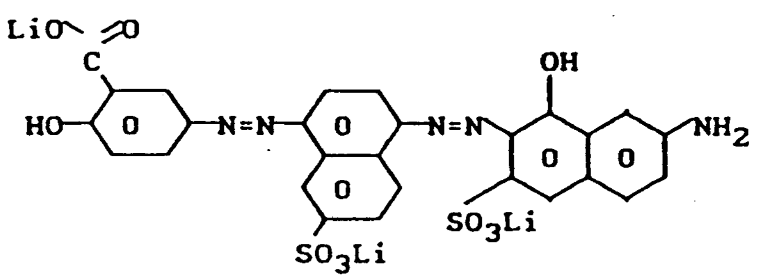

(c)

werden bei Raumtemperatur in 67 g Wasser und 30 g Diethylenglykol gelöst; die Losung wird durch ein 1-$\mu$-Filter filtriert und anschließend unter Vakuum entgast. Man erhält eine schwarze Tinte, die im Ink-Jet-Verfahren licht-, reib- und wasserechte Aufzeichnungen liefert.

Beispiel 2

3 g des Farbstoffes der Formel (l) werden unter Zusatz von 1 g Lithiumhydroxid bei Raumtemperatur in 30 g Dimethylsulfoxid und 66 g Ethylenglykol gelöst; die Lösung wird durch ein 1-$\mu$-Filter filtriert und anschließend im Vakuum entgast. Man erhält eine schwarze Tinte, die im Ink-Jet-Verfahren licht-, reib- und wasserechte Aufzeichnungen liefert.

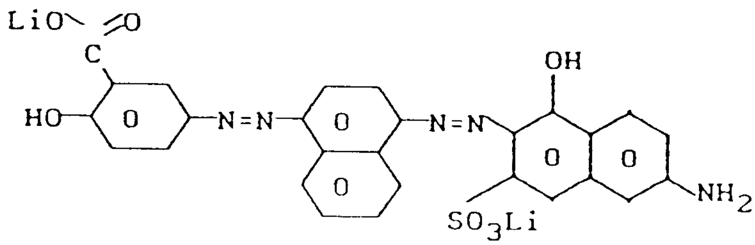
(l)

Beispiel 3

Verwendet man statt des in Beispiel 2 eingesetzten Farbstoffes einen der Formel (o) sowie Lthiumhydroxid als Base, so erhält man ebenfalls eine schwarze Tinte, die in Ink-Jet-Verfahren licht-, reib- und wasserechte Aufzeichnungen liefert.

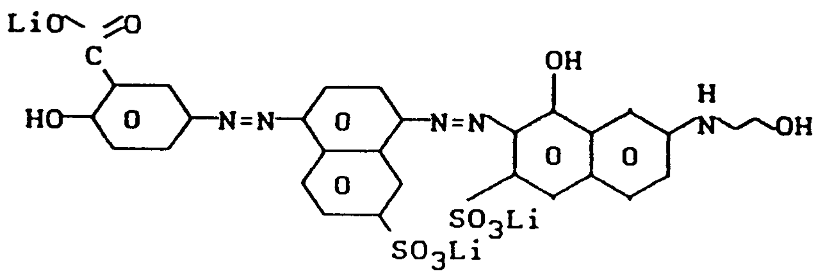
(o)

Beispiel 4

3 g des Farbstoffes der Formel (p) werden bei Raumtemperatur in 20 g $\epsilon$-Caprolactam, 60 g Wasser und 17 g Glycerin gelöst; die Lösung wird durch ein 1-$\mu$-Filter filtriert und anschließend im Vakuum entgast. Man erhält eine schwarze Tinte, die im Ink-Jet-Verfahren licht-, reib- und wasserechte Aufzeichnungen liefert.

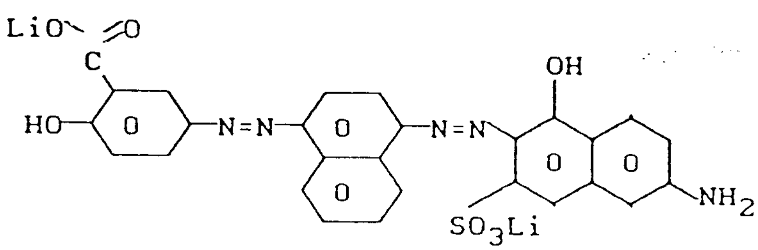
(p)

**Patentansprüche**

1. Aufzeichnungsflüssigkeit für Tintenstrahl-Aufzeichnungssysteme, dadurch gekennzeichnet, daß sie einen Farbstoff der Formeln

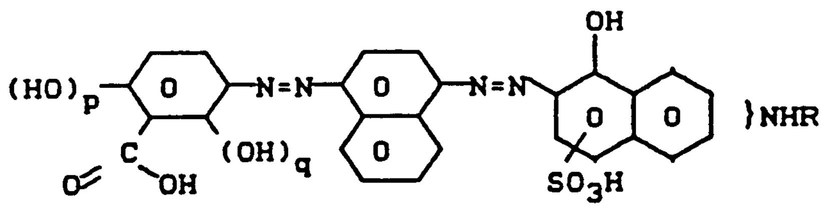

(I)

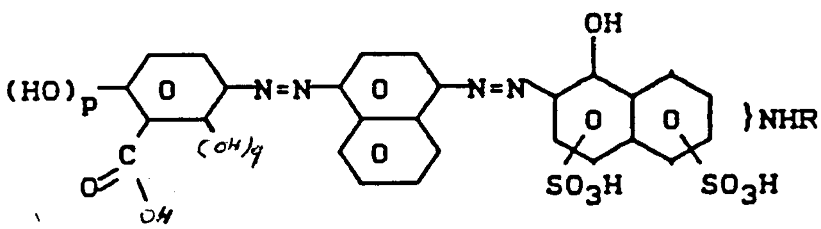

(II)

und

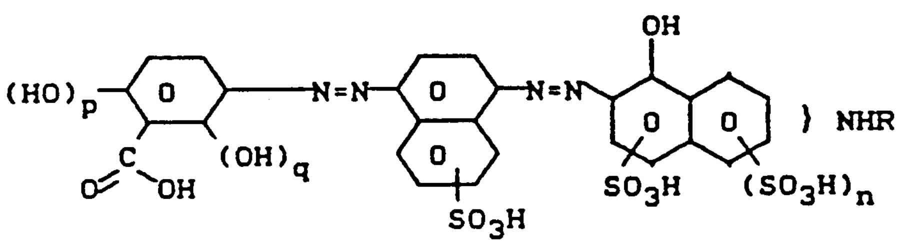

(III)

in Form eines Lithiumsalzes enthält, wobei

R = H, gegebenenfalls durch OH oder Amino substituiertes $C_1$-$C_4$-Alkyl, gegebenenfalls substituiertes $C_1$-$C_4$-Alkylcarbonyl, gegebenenfalls substituiertes Phenyl oder gegebenenfalls substituiertes Phenylcarbonyl,

n = 0, 1

p,q = 0, 1, wobei p + q = 1.

2. Aufzeichnungsflüssigkeit gemäß Anspruch 1, gekennzeichnet durch einen Gehalt an Farbstoffen der Formel

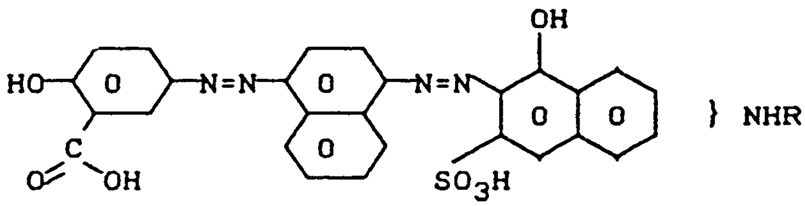

(IV)

in Form ihrer Lithiumsalze.

3. Aufzeichnungsflüssigkeit gemäß Anspruch 2, gekennzeichnet durch einen Gehalt an Farbstoffen der Formel

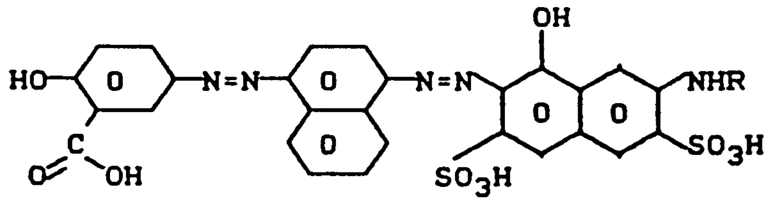

(V)

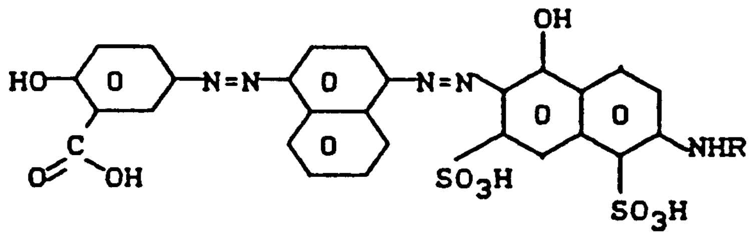

(VI)

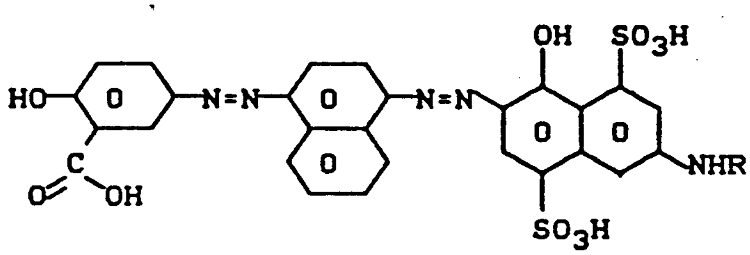

(VII)

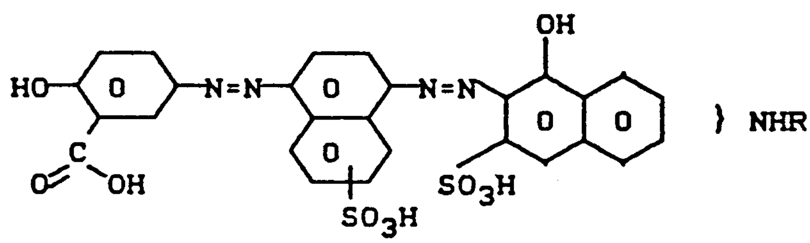

(VIII)

in Form ihrer Lithiumsalze.

4. Aufzeichnungsflüssigkeit gemäß Ansprüchen 1 bis 3, gekennzeichnet durch einen Gehalt an Farbstoffen mit
   R = H, $CH_3$, $C_2H_4OH$, $C_2H_4NH_2$, Phenyl, 3-Sulfophenyl, Acetyl, Propionyl, Benzoyl, Maleinyl, 4-Sulfophenyl, 3-Carboxyphenyl, 4-Carboxyphenyl.

5. Verwendung der Aufzeichnungsflüssigkeiten gemäß Ansprüchen 1 bis 5 in Tintenstrahl-Aufzeichnungssystemen.

**Claims**

1. Recording liquid for ink jet recording systems, characterised in that it contains a dyestuff of the formula

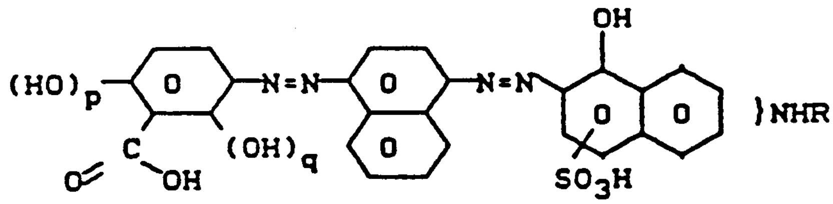 (I)

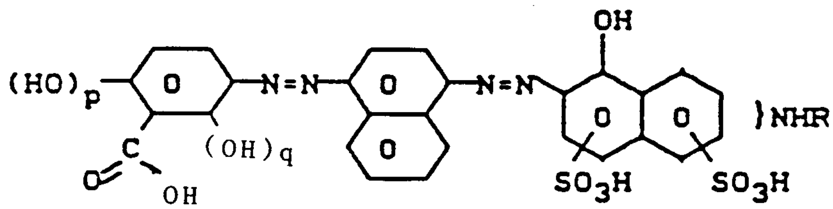 (II)

or

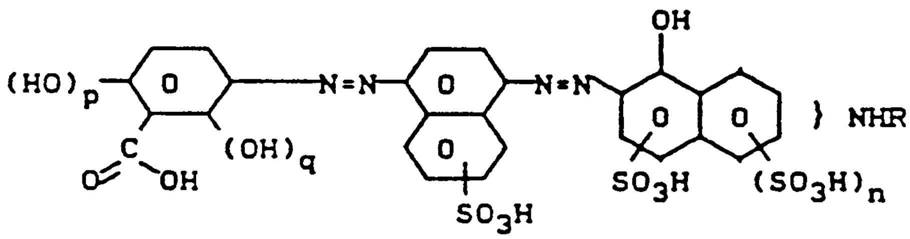 (III)

in the form of lithium salt, where
R = H, $C_1$-$C_4$-alkyl which is optionally substituted by OH or amino, optionally substituted $C_1$-$C_4$-alkylcarbonyl, optionally substituted phenyl or optionally substituted phenylcarbonyl,
n = 0 or 1 and
p and q = 0 or 1, and p + q = 1.

**2.** Recording liquid according to Claim 1, characterised in that it contains dyestuffs of the formula

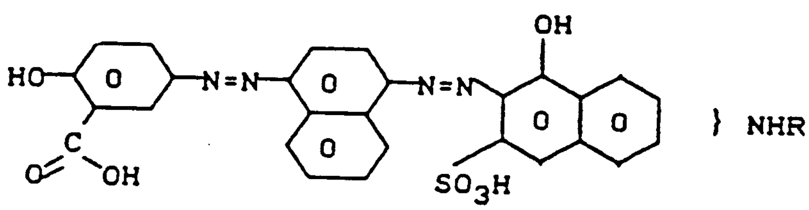 (IV)

in the form of their lithium salts.

**3.** Recording liquid according to Claim 2, characterised in that it contains dyestuffs of the formula

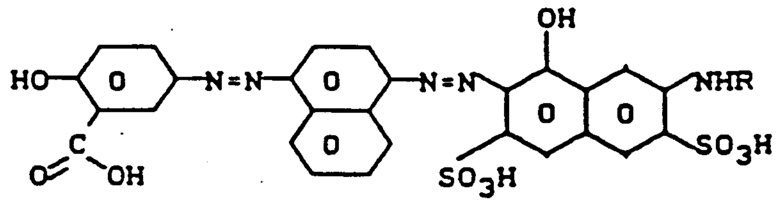

(V)

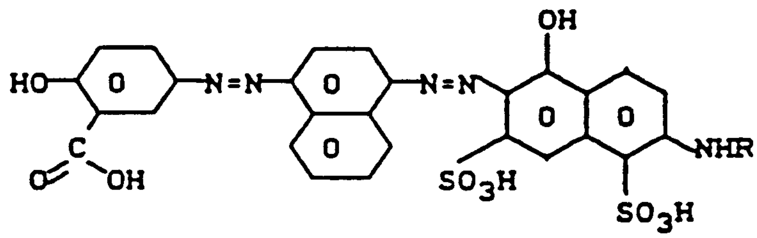

(VI)

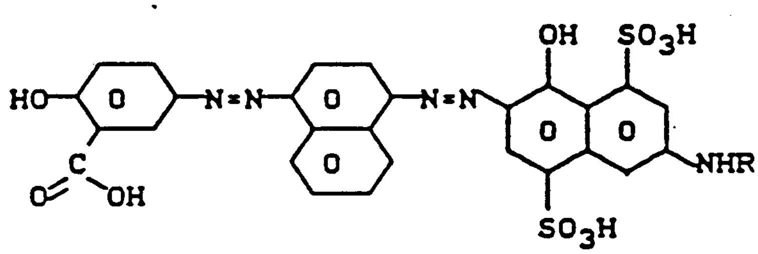

(VII)

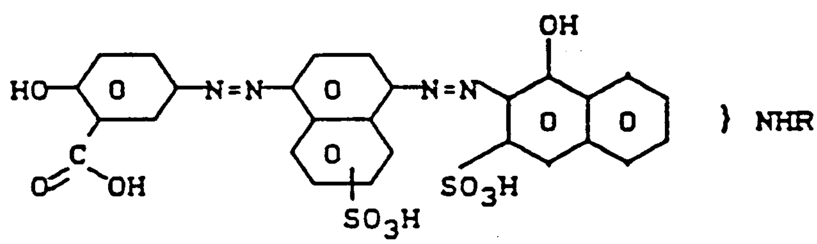

(VIII)

in the form- of their lithium salts.

**4.** Recording liquid according to Claims 1 to 3, characterised in that it contains dyestuffs where R = H, $CH_3$, $C_2H_4OH$, $C_2H_4NH_2$, phenyl, 3-sulphophenyl, acetyl, propionyl, benzoyl, maleinyl, 4-sulphophenyl, 3-carboxyphenyl or 4-carboxyphenyl.

**5.** Use of the recording liquids according to Claims 1 to 5 in ink jet recording systems.

**Revendications**

**1.** Liquide d'impression pour systèmes d'impression par jet d'encre, caractérisé en ce qu'il contient un colorant répondant aux formules

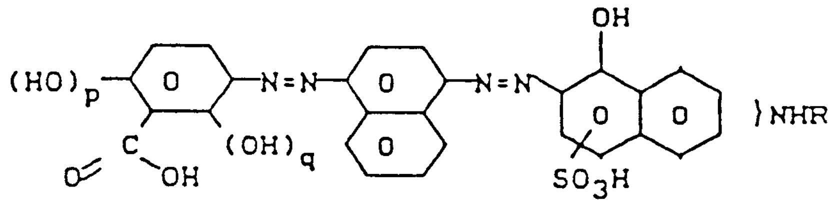

(I)

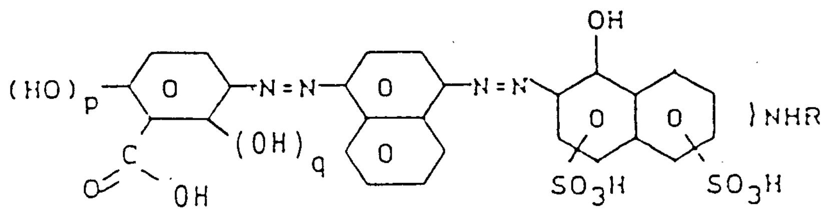

(II)

et

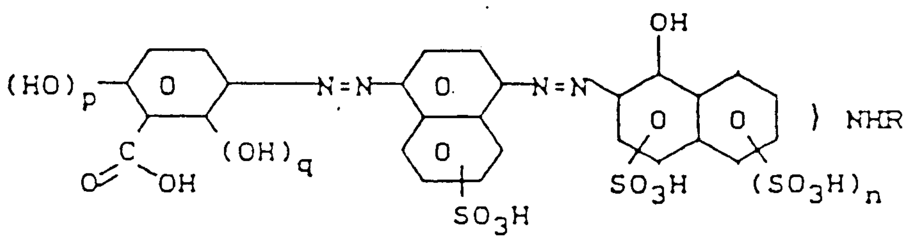

(III)

sous forme d'un sel de lithium,

où

R = H, un groupe alkyle en $C_1$-$C_4$ éventuellement substitué par OH ou amino, un groupe alkylcarbonyle en $C_1$-$C_4$ éventuellement substitué, un groupe phényle éventuellement substitué ou un groupe phénylcarbonyle éventuellement substitué,

n = 0,1

p,q = 0,1, avec p + q = 1.

**2.** Liquide d'impression selon la revendication 1, caractérisé par une teneur en colorants de formule

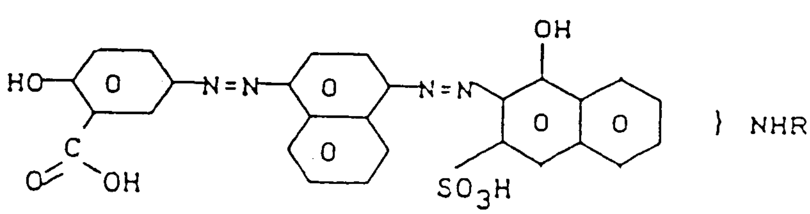

(IV)

sous forme de leurs sels de lithium.

**3.** Liquide d'impression selon la revendication 2, caractérisé par une teneur en colorants de formule

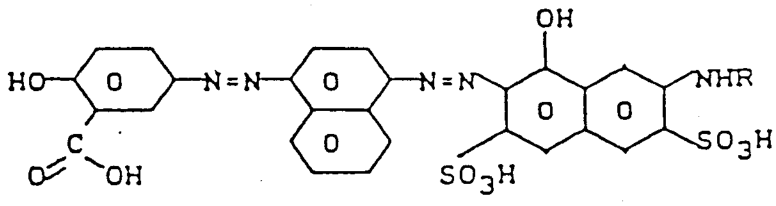

(V)

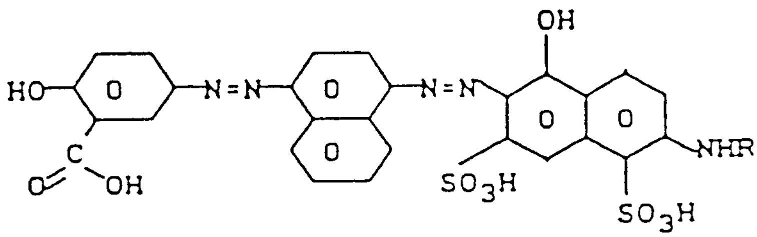

(VI)

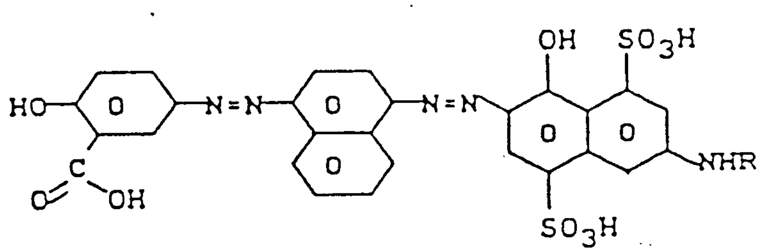

(VII)

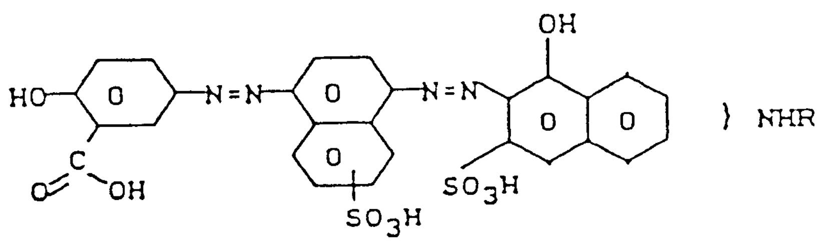

(VIII)

sous forme de leurs sels de lithium.

**4.** Liquide d'impression selon les revendications 1 à 3, caractérisé par une teneur en colorants dans lesquels

R = H, $CH_3$, $C_2H_4OH$, $C_2H_4NH_2$, phényle, 3-sulfophényle, acétyle, propionyle, benzoyle, maléinyle, 4-sulfophényle, 3-carboxyphényle, 4-carboxyphényle.

**5.** Utilisation des liquides d'impression selon les revendications 1 à 5 dans des systèmes d'impression par jet d'encre.